# EUROPÄISCHE PATENTANMELDUNG

(11) **EP 1 254 736 A2**
(43) Veröffentlichungstag der Anmeldung: **06.11.2002**
(21) Anmeldenummer: 02007995.0
(22) Anmeldetag: 10.04.2002
(51) Int. Cl.: B23K 26/067, A24C 5/60

(54) **Vorrichtung zum Perforieren von stabförmigen Gegenständen insbesondere der Tabak verarbeitenden Industrie**

(30) Priorität: 30.04.2001 DE 10120923; 07.12.2001 DE 10160167
(71) Anmelder: Hauni Maschinenbau Aktiengesellschaft, 21033 Hamburg (DE)
(72) Erfinder: Voss, Helmut, 25551 Lockstedt (DE)
(74) Vertreter: Eisenführ, Speiser & Partner

(57) **Zusammenfassung**

Die Erfindung betrifft eine Vorrichtung und ein Verfahren zum Herstellen von Zonen (62, 64) gewünschter Luftdurchlässigkeit im Hüllmaterial (60) stabförmiger Gegenstände insbesondere der tabakverarbeitenden Industrie, mit einer Strahlführungseinrichtung (50, 52, 54) zum Fokussieren eines von einer Strahlenquelle (37) erzeugten energiereichen Strahls (38) auf das Hüllmaterial (60) zur Ausbildung von Perforationszonen (62, 64), und einer Mehrfachstrahlerzeugungs-einrichtung, die aus dem Stahl einen Mehrfachstrahl (39) bildet. Das Besondere der Erfindung besteht darin, daß die Mehrfachstrahlerzeugungseinrichtung mindestens ein einziges, in seiner Arbeitsstellung gegenüber dem Strahl (37) feststehendes optischen Element (80) aufweist.

## Beschreibung

Die Erfindung betrifft eine Vorrichtung zum Herstellen von Zonen gewünschter Luftdurchlässigkeit im Hüllmaterial stabförmiger Gegenstände insbesondere der tabakverarbeitenden Industrie, einer Strahlführungseinrichtung zum Fokussieren eines von einer Strahlenquelle erzeugten energiereichen Strahls auf das Hüllmaterial zur Ausbildung einer der Anzahl der Teilstrahlen entsprechender Anzahl von Perforationszonen und mit einer Mehrfachstrahlerzeugungseinrichtung, die aus dem Stahl einen Mehrfachstrahl bildet. Ferner betrifft die Erfindung einen Strahlenteiler, insbesondere für den Einsatz in solchen Vorrichtung, zur Aufteilung eines von einer Strahlenquelle erzeugten Strahles in mindestens zwei Teilstrahlen. Schließlich betrifft die Erfindung noch ein Verfahren Verfahren zur Herstellung von Zonen gewünschter Luftdurchlässigkeit im Hüllmaterial stabförmiger Gegenstände insbesondere der Tabak verarbeitenden Industrie, mit den Schritten, einen von einer Strahlenquelle erzeugten energiereichen Strahl auf das Hüllmaterial zur Ausbildung von Perforationszonen zu fokussieren und aus dem Strahl einen Mehrfachstrahl zu bilden.

Unter stabförmigen Gegenständen der tabakverarbeitenden Industrie sollen im hier vorliegenden Zusammenhang alle diejenigen Artikel verstanden werden, die im Zuge ihrer Herstellung oder hinterher mit einer Perforation versehen werden. Dies sind in erster Linie Filterzigaretten, können aber auch andere Arten von Zigaretten, andere stabförmige Rauchartikel oder Filterstäbe sein. Unter Hüllmaterial sind Streifen zum Umhüllen von Tabaksträngen oder Filtersträngen, Belagpapierstreifen, Belagpapierblättchen usw. zu verstehen, die als Materialbahn, gebrauchsfertige Abschnitte oder Hülle der stabförmigen Gegenstände perforiert werden können.

Durch die Perforation des Hüllmaterials von Zigaretten und anderen stabförmigen Rauchartikeln entsteht in deren Umhüllung eine Zone gewünschter Luftdurchlässigkeit, durch die der Raucher beim Rauchen Nebenluft ansaugt. Dadurch werden die Anteile von Nikotin und Kondensat im Rauch beeinflusst, was auch geschmackliche Auswirkungen hat. Für die Perforation des Hüllmaterials wird vorzugsweise ein Laser eingesetzt, dessen Strahlung über eine optische Strahlführungseinrichtung in die jeweiligen Perforationszonen gelenkt wird und dort die gewünschten Löcher in das Hüllmaterial einbringt.

Mit Hilfe der Mehrfachstrahlerzeugungseinrichtung lassen sich Doppel- oder Mehrfachstrahlen zur Herstellung von mindestens zwei nebeneinander liegenden Perforationsspuren in einer und derselben Perforationszone erzeugen, wobei die Perforationsspuren gemeinsam ein Perforationsmuster in der Perforationszone bilden. Durch entsprechende Führung und Modulation der Doppel- oder Mehrfachstrahlen lassen sich unterschiedliche Perforationsmuster in Abhängigkeit von den gewünschten Erfordernissen erzeugen. Ein Vorteil der Ausbildung von Perforationsmustern durch mehrere nebeneinander liegende Perforationsspuren besteht darin, daß die gewünschte Perforation über eine bestimmte Fläche mit einer bestimmten Längenausdehnung realisiert werden kann.

Zum Stand der Technik wird auf die DE 195 30 216 A1 hingewiesen, welche als eine Ausführung eine Vorrichtung der eingangs genannten Art zeigt, die als Strahlenquelle einen einzigen Laser verwendet. Die Mehrfachstrahlerzeugungseinrichtung dieser bekannten Vorrichtung besteht aus einem Strahlteiler und Umlenkspiegeln, um aus dem Strahl von der Strahlenquelle zwei Strahlen zu erzeugen. Da auf modernen Zigarettenproduktionsmaschinen während der Produktion zunächst Doppelzigaretten hergestellt werden, die im weiteren Verlauf zu Einzelzigaretten zerschnitten werden, muss der die einzelnen Tabakstäbe mit dem Filterabschnitt verbindende Belagpapierstreifen oder die verbundenen Doppelzigaretten in zwei Perforationszonen perforiert werden, so daß jede Einzelzigarette eine entsprechende Perforationszone erhält. Deshalb werden bei der bekannten Vorrichtung die Doppel- oder Mehrfachstrahlen jeweils noch in zwei Teilstrahlen unterteilt, wozu die Strahlteilereinrichtung vorgesehen ist und die Strahlführungseinrichtung dieser bekannten Vorrichtung mindestens einen weiteren Umlenkspiegel aufweist. Somit werden bei der bekannten Vorrichtung zwei Strahlen ausgebildet, die in den gemeinsamen Perforationszonen jeweils zu einem Mehrfachstrahl zusammengeführt werden. Außerdem weist die Strahlführungseinrichtung hierzu eine gemeinsame Optik auf, die die Strahlen in den Perforationszonen auf die nebeneinander verlaufenden Perforationsspuren fokussiert. Dabei ist es wichtig, daß die Doppel- bzw. Mehrfachstrahlen in einen bestimmten, recht spitzen Winkel auf den Strahlteiler der Strahlführungseinrichtung gelenkt werden, was eine exakte Justierung des Strahlteilers und der Umlenkspiegel der Mehrfachstrahlerzeugungseinrichtung bedingt.

Aufgabe der Erfindung ist es, eine weitere Vorrichtung und ein weiteres Verfahren der eingangs genannten Art anzugeben.

Gelöst wird diese Aufgabe erfindungsgemäß dadurch, daß bei einer Vorrichtung der eingangs genannten Art die Mehrfachstrahlerzeugungseinrichtung mindestens ein einziges in seiner Arbeitsstellung gegenüber dem Strahl von der Strahlenquelle feststehendes optisches Element aufweist.

Erfindungsgemäß hat sich nämlich gezeigt, daß derartige optische Elemente verfügbar sind, um die gewünschten Mehrfachstrahlen zu erzeugen. Mit Hilfe der Erfindung ist es nun möglich, eine einfache Mehrfachstrahlerzeugungseinrichtung zu realisieren und dabei sowohl auf bewegte und somit anfällige optische Elemente als auch auf komplex optische Einrichtungen verzichten zu können. Das diffraktive optische Element kann im Strahlengang wahlweise vor oder hinter der Strahlführungseinrichtung angeordnet sein

Insbesondere ist ein diffraktives optisches Element in der Lage, die gewünschten leicht divergierenden Doppel- oder Mehrfachstrahlen aus einem einzigen Strahl zu erzeugen, der vorzugsweise von einer einzigen Strahlenquelle stammt, ohne daß weitere separate und ggf. zu justierende optische Elemente notwendig sind.

Zwar ist die Verwendung von diffraktiven optischen Elementen in einer Vorrichtung der eingangs genannten Art aus der DE 195 11 393 A1 und der EP 0 761 376 A1 bekannt; jedoch bilden in den aus diesem Stand der Technik bekannten Vorrichtungen die diffraktiven optischen Elemente Bestandteile der Strahlführungseinrichtung und sind in der Strahlführungseinrichtung insbesondere als Strahlteiler zur Aufteilung der dort bereits vorhandenen Doppel- oder Mehrfachstrahlen eingesetzt, während die Mehrfachstrahlerzeugungseinrichtung dieser bekannten Vorrichtungen aus andersartigen optischen Elementen besteht und somit eine andersartige konstruktive Lösung aufweist. Demgegenüber gibt dieser Stand der Technik keine Anregung, ein diffraktives optisches Element - zusätzlich oder anstelle der Strahlführungseinrichtung - in der oder als Mehrfachstrahlerzeugungseinrichtung einzusetzen und somit zur Erzeugung der Doppel- oder Mehrfachstrahlen vor Eintritt in die Strahlführungseinrichtung zu verwenden, so daß dieser Stand der Technik die Erfindung nicht nahelegen konnte.

Insbesondere eignet sich als diffraktives optisches Element ein optisches Gitter.

Eine weitere bevorzugte Ausführung, bei welcher das optische Element einen Mehrfachstrahl mit einer geraden Anzahl von winklig zueinander austretenden Teilstrahlen erzeugt, zeichnet sich dadurch aus, daß das optische Element so ausgebildet ist, daß ein erster Teilstrahl des Mehrfachstrahls in der Richtung bzw. entlang der Achse des in das optische Element eintretenden Strahls und der oder die weiteren Teilstrahlen des Mehrfachstrahls winklig zur Richtung bzw. Achse des in das optische Element eintretenden Strahls aus dem optischen Element austreten. Diese Ausführung macht sich die Erkenntnis zu Nutze, daß im Regelfall ein Streustrahl in Richtung des Strahlenganges des einfallenden Strahles unvermeidlich entsteht. Bei der vorliegenden Ausführung wird nun dieser Streustrahl in geschickter Weise dazu genutzt, den ersten Teilstrahl selbst zu bilden, so daß der Streustrahl nicht mehr störend, sondern nutzbringend in Erscheinung tritt. Der erste Teilstrahl, der im wesentlichen vom Streustrahl gebildet wird und in Richtung der Achse des Strahlenganges des einfallenden Strahles aus dem optischen Element wieder austritt, wird demnach nicht gebeugt und kann deshalb auch als Teilstrahl nullter Beugungsordnung bezeichnet werden, während der zweite Teilstrahl als Teilstrahl erster Beugungsordnung und die gegebenenfalls weiteren Teilstrahlen als Teilstrahlen zweiter bis n-ter Beugungsordnung bezeichnet werden können.

Vorzugsweise erzeugt das optische Element einen Mehrfachstrahl mit zwei in einem Winkel zueinander divigierenden Teilstrahlen, wobei das optische Element so ausgebildet ist, daß der erste Teilstrahl des Mehrfachstrahls in der Richtung bzw. entlang der Achse des in das optische Element eintretenden Strahls austritt und somit den Teilstrahl nullter Beugungsordnung bildet und der zweite Teilstrahl des Mehrfachstrahls im Winkel zur Richtung bzw. Achse des in das optische Element eintretenden Strahls aus dem optischen Element austritt und somit den Teilstrahl erster Beugungsordnung bildet. Hierzu sollte das optische Element zweckmäßigerweise so ausgebildet sein, daß ein in bezug auf die Achse zum zweiten Teilstrahl spiegelsymmetrischer weiterer Teilstrahl im wesentlichen unterdrückt wird. Bei diesem zu unterdrückenden weiteren Teilstrahl handelt es sich um einen Teilstrahl mit -1. Beugungsordnung. In gleicher Weise können auch ggf. weitere auftretende Teilstrahlen mit -2. bis -nter Beugungsordnung unterdrückt werden.

Demnach wird die zuvor angegebene Aufgabe ebenfalls erfindungsgemäß dadurch gelöst, daß bei einem Verfahren der eingangs genannten Art in einem diffraktiven optischen Element der Strahl in eine gerade Anzahl von winklig zueinander divergierenden Teilstrahlen zur Bildung des Mehrfachstrahls aufgefächert wird.

Das optische Element sollte aus dem Strahlengang entfernbar angeordnet sein. Eine solche Anordnung ist vorteilhaft, um beispielsweise das optische Element im Hinblick auf unterschiedliche Anforderungen auszutauschen. Sollte außerdem einmal die Ausbildung von mehreren nebeneinander verlaufenden Perforationsspuren nicht gewünscht sein, sondern stattdessen nur eine einzige Perforationsspur in der Perforationszone eingebracht werden, so ist diese Ausführung ebenfalls von Vorteil, da sich für einen solchen Fall das optische Element einfach entfernen lässt und in seiner aus dem Strahlengang herausgeschwenkten Stellung das optische Element unwirksam ist. Schließlich lässt sich durch Entfernung des optischen Elementes auch die Wartung vereinfachen. Zwecksmäßigerweise sollte das optische Element vorzugsweise aus dem Strahlengang verschwenkbar angeordnet sein. In der in den Strahlengang verschwenkten erster Stellung ist dann das optische Element wirksam, um die Doppel- oder Mehrfachstrahlen zu erzeugen, wobei in dieser ersten Stellung das optische Element erfindungsgemäß relativ zum Strahlengang, d. h. zu dem von der Strahlenquelle erzeugtem Strahl, feststeht.

Üblicherweise ist die Strahlführungseinrichtung in einem Gehäuse untergebracht, das auch als Strahlteilerkopf bezeichnet werden kann. In einem solchen Fall ist es vorteilhaft, ein Halteelement zur Halterung des optischen Elementes am oder im Gehäuse vorzusehen. Vorzugsweise sollte das optische Element am Halteelement sitzen, so daß das optische Element vom Halteelement getragen wird.

Aus den bereits zuvor genannten Erwägungen sollte das Halteelement am oder im Gehäuse lösbar befestigt sein.

Das Halteelement sollte beweglich im Gehäuse angeordnet und in Richtung vom Gehäuse weg durch eine Feder vorgespannt sein. Diese Ausführung ist dann Vorteilhaft, wenn das Gehäuse mit seiner das Halteelement tragenden Seite an einer Maschine angeflanscht ist, indem durch die Vorspannung das Halteelement gegenüber einer solchen Maschine fixiert wird.

Vorzugsweise können Mittel zur Erfassung der Anwesenheit des Gehäuses und/oder des Halteelementes bei Anordnung an einer die stabförmigen Gegenstände herstellenden Maschine vorgesehen sein, was prozesstechnische Vorteile im Produktionsablauf mit sich bringt.

Eine weitere gegenwärtig besonders bevorzugte Ausführung zeichnet sich dadurch aus, daß das Halteelement aus einem Tubus besteht, durch den die Strahlung geleitet wird und an dessen der Strahlführungseinrichtung zugewandtem Ende das optische Element vorzugsweise sitzt. Zur einfacheren Handhabung sollte dabei der Tubus in das Gehäuse steckbar angeordnet sein.

Zwecksmäßigerweise sollte die Strahlführungseinrichtung optische Fokussiermittel zur Erzeugung von konvergierenden Strahlen und Fokussierung auf die Perforationszonen auf dem Hüllmaterial aufweisen.

Eine weitere gegenwärtig besonders bevorzugte Ausführung, bei welcher die Mehrfachstrahlerzeugungseinrichtung aus dem Strahl von der Strahlenquelle einen Mehrfachstrahl bildet, eine Strahlteilungseinrichtung vorgesehen ist, die den Mehrfachstrahl in mindestens zwei Teilstrahlen aufteilt, und die Strahlführungseinrichtung die Teilstrahlen von der Strahlteilungseinrichtung auf das Hüllmaterial zur Ausbildung einer der Anzahl der Teilstrahlen entsprechenden Anzahl von Perforationszonen fokussiert, zeichnet sich dadurch aus, daß die Mehrfachstrahlenerzeugungseinrichtung aus einem einzigen, in seiner Arbeitstellung gegenüber dem Strahl von der Strahlenquelle feststehenden optischen Element besteht. Bei dieser Ausführung ist demnach ein einziges optisches Element vorgesehen, daß im Strahlengang vor der Strahlführungseinrichtung sitzt.

Ferner kann das optische Element im Strahlengang auch vor der Strahlteilungseinrichtung angeordnet werden. Dabei sollte das optische Element grundsätzlich möglichst dicht an der Strahlteilungseinrichtung, also in möglichst kurzem Abstand angeordnet sein, um eine allzu starke Divergenz der durch das optische Element erzeugten Doppel- bzw. Mehrfachstrahlen zu vermeiden, bevor sie in die Strahlteilungseinrichtung eintreten und entsprechend in zwei oder mehrere Teilstrahlen aufgeteilt werden, welche anschließend von der Strahlführungseinrichtung weitergeleitet und dann wieder zu konvergierenden Teilstrahlen für die Fokussierung auf die Perforationszonen umgewandelt werden.

Alternativ ist es bei dieser Ausführung aber auch denkbar, das optische Element in den Strahlteiler der Strahlteilungseinrichtung zu integrieren, wodurch der benötigte Platz besonders klein gehalten werden kann. Hierbei kann der Strahlteiler gleichzeitig auch das optische Element bilden, so daß nur ein einziges optisches Bauteil vorgesehen sein kann, daß die Funktionen des Strahlteilers und des optischen Elementes in sich vereint. Ein solcher integrierter Strahlteiler bildet im übrigen einen eigenständigen Erfindungsaspekt.

Eine weitere alternative Ausführung der Erfindung, bei welcher eine Strahlteilungseinrichtung vorgesehen ist, die den von der Strahlenquelle erzeugten energiereichen Strahl in mindestens zwei Teilstrahlen aufteilt, und die Strahlführungseinrichtung die Teilstrahlen auf das Hüllmaterial zur Ausbildung einer der Anzahl der Teilstrahlen entsprechenden Anzahl von Perforationszonen fokussiert, wobei die Mehrfachstrahlerzeugungseinrichtung aus jedem Teilstrahl einen Mehrfachstrahl bildet, zeichnet sich dadurch aus, daß die Mehrfachstrahlerzeugungseinrichtung für jeden Teilstrahl ein in seiner Arbeitsstellung gegenüber dem jeweiligen Teilstrahl feststehendes optisches Element aufweist. Bei dieser Ausführung ist die Mehrfachstrahlerzeugseinrichtung im Strahlengang gewöhnlich hinter der Strahlteilungseinrichtung angeordnet. Da für jeden Teilstrahl ein eigenes optisches Element vorgesehen ist, weist demnach die Mehrfachstrahlerzeugungseinrichtung dieser Ausführung eine der Anzahl der Teilstrahlen entsprechende Anzahl von optischen Elementen auf.

Nachfolgend werden bevorzugte Ausführungsbeispiele der Erfindung anhand der beiliegenden Zeichnungen näher erläutert. Es zeigen:
- Fig. 1: eine schematische Darstellung einer Filteransetzmaschine der Anmelderin;
- Fig. 2: eine schematische Darstellung einer bevorzugten Ausführung einer in der Filteransetzmaschine von Fig. 1 angeordneten Perforationsvorrichtung;
- Fig. 3: im Querschnitt eine detaillierte Darstellung eines Strahlteilerkopfes der Perforationsvorrichtung von Fig. 2 in einer ersten Ausführung (a) und einer zweiten Ausführung (b);
- Fig. 4: schematisch das maschinenseitige Ende eines in der ersten Ausführung eines Strahlteilerkopfes gemäß Fig. 3a angeordneten Tubus mit einer Kodiereinrichtung;
- Fig. 5: schematisch im Querschnitt ein feststehendes diffraktives optisches Element in einer ersten Ausführung (Fig. 5a) und einer zweiten Ausführung (Fig. 5b); und
- Fig. 6: schematisch ein integriertes optische Bauelement als dritte Ausführung, das die Eigenschaften eines diffraktiven optischen Elementes und eines Strahlenteilers in sich vereint, wobei Fig. 6a in einem vergrößerten Ausschnitt einen Abschnitt des Bauelementes im Querschnitt zeigt.

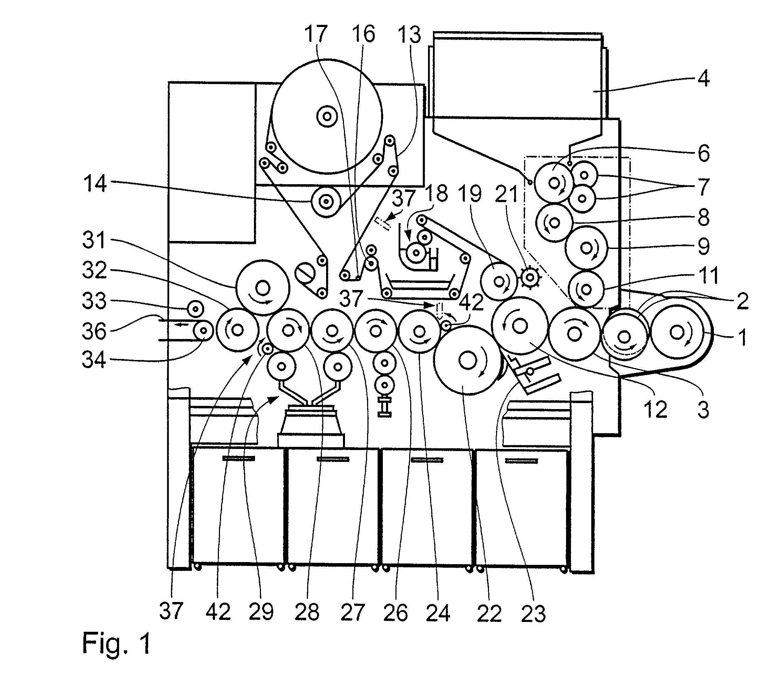

Die Filteransetzmaschine gemäß Fig. 1 ist an sich bekannt und wird im Folgenden zum allgemeinen Verständnis nur kurz bezüglich Aufbau und Wirkungsweise beschrieben.

Eine Einlauftrommel 1 übergibt die auf einer Zigarettenherstellungsmaschine produzierten Zigaretten an zwei Staffeltrommeln 2, welche die gestaffelt zugeführten Zigaretten entstaffeln und in Reihen zu je zwei Stück mit einem Zwischenraum zwischen den Zigaretten an eine Zusammenstelltrommel 3 abgeben. Die Filterstäbe gelangen aus einem Magazin 4 auf eine Schneidtrommel 6, werden von zwei Kreismessern 7 zu Filterstopfen doppelter Gebrauchslänge geschnitten, auf einer Staffeltrommel 8 gestaffelt, von einer Schiebetrommel 9 zu einer Reihe hintereinander liegender Stopfen ausgerichtet und von einer Beschleunigertrommel 11 in die Zwischenräume der Zigarettenreihen auf der Zusammenstelltrommel 3 abgelegt.

Die so gebildeten Zigarette-Filter-Zigarette-Gruppen werden zusammengeschoben, so daß sie axial dicht an dicht liegen. Anschließend werden sie von einer Übergabetrommel 12 übernommen. Ein Belagpapierstreifen 13 wird von einer Belagpapierbobige 14 mittels einer Zuführanordnung in Form einer Abzugwalze 16 abgezogen. Der Belagpapierstreifen 13 wird um einen eine scharfe Kante aufweisenden Vorbrecher 17 herumgelenkt, von einer Beleimvorrichtung 18 beleimt und auf einer Belagwalze 19 von einer Messertrommel 21 geschnitten. Die geschnittenen Belagblättchen werden an die Zigaretten-Filter-Gruppen auf der Übergabetrommel 12 angeheftet und auf einer Rolltrommel 22 mittels einer Rollhand 23 um die Zigaretten-Filter-Gruppen herumgerollt.

Die so hergestellten und nun fertigen Doppel-Filter-Zigaretten-Gruppen werden über eine Trockentrommel 24 einer Schneidtrommel 26 zugeführt und auf dieser durch mittiges Schneiden durch die Filterstopfen hindurch zu Einzelfilterzigaretten konfektioniert, wobei gleichzeitig fehlerhafte Filterzigaretten ausgeworfen werden. Eine mit einer Übergabetrommel 27 und einer Sammeltrommel 28 zusammenwirkende Wendeeinrichtung 29 wendet eine Filterzigarettenreihe und überführt sie gleichzeitig in die über die Übergabetrommel 27 und die Sammeltrommel 28 durchlaufende ungewendete Filterzigarettenreihe. Über eine Prüftrommel 31 gelangen die Filterzigaretten zu einer Auswerftrommel 32, auf der vor dem Auswerfvorgang außerdem die Kopfabtastung der Filterzigaretten erfolgt. Eine mit einer Bremstrommel 33 zusammenwirkende Ablegertrommel 34 legt die Filterzigaretten auf ein Ablegerband 36.

Der Filteransetzmaschine ist ein Laserkopf 37 entweder im Bereich des Belagpapierstreifens 13 oder im Bereich eines Querförderers, im vorliegenden Fall der Trockentrommel 24 oder der Sammeltrommel 28, zugeordnet.

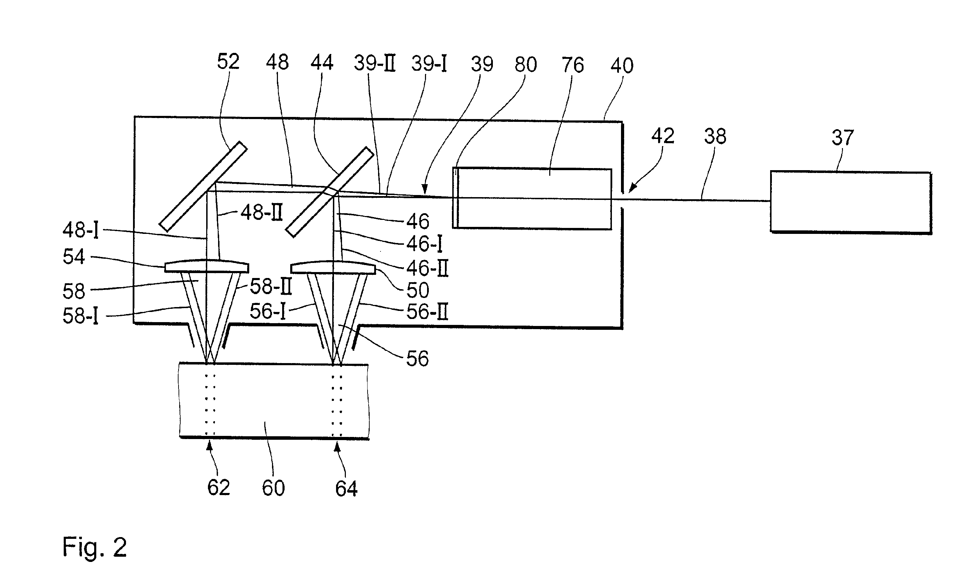

Der Laserkopf 37 ist Teil einer optischen Perforationsvorrichtung, wie sie in Fig. 2 in einer bevorzugten Ausführung dargestellt ist, und dient als Strahlenquelle zur Erzeugung und Abgabe eines Laserstrahles 38. Die in Fig. 2 dargestellte Perforationsvorrichtung weist ferner ein einen Strahlteilerkopf bildendes Gehäuse 40 auf, durch dessen dem Laserkopf 37 zugewandte Öffnung 42 der Laserstrahl 38 in das Gehäuse 40 tritt. Innerhalb des Gehäuses 40 trifft der Laserstrahl auf einen dort angeordneten Strahlenteiler 44, der den Laserstrahl 38 in einen ersten Strahl 46 und einen zweiten Strahl 48 teilt. Im dargestellten Ausführungsbeispiel besteht der Strahlenteiler 44 aus einem halbdurchlässigen Spiegel, der den ersten Strahl 46 reflektiert und den zweiten Strahl 48 durchlässt. Während der reflektierte erste Strahl 46 zu einem ersten Strahlungskopf 50 geleitet wird, ist der transmittierte zweite Strahl 48 auf einen Umlenkspiegel 52 gerichtet, der den zweiten Strahl 48 in Richtung auf einen zweiten Strahlungskopf 54 umlenkt, so daß der zweite Strahl 48 dann in einem Abstand und parallel zum ersten Strahl 46 verläuft. Die Strahlungsköpfe 50 und 54 weisen entsprechende Optiken auf, um aus den ersten und zweiten Strahlen 46 und 48 entsprechende konvergierende erste und zweite Strahlen 56 und 58 zu erzeugen, die auf einem Belagpapierabschnitt 60 vorgesehene Perforationszonen 62 und 64 fokussiert sind.

Der in Fig. 2 gezeigte Belagpapierabschnitt 60 ist entweder Teil eines Belagpapierstreifens 13 (siehe Fig. 1) oder Teil einer Umhüllung einer bereits hergestellten Doppelzigarette. Wie bereits erwähnt, entstehen derartige Doppelzigaretten während der Herstellung, indem zwischen zwei axial fluchtenden Tabaksträngen ein doppelt langer Filterabschnitt eingesetzt wird und diese Gruppe aus Tabakstäben und Filterabschnitt mit einem beleimten Belagblättchen verbunden wird. Wenn die Perforationen in die Umhüllung einer so hergestellten Doppelzigarette eingebracht werden sollen, wird die Doppelzigarette auf einer Trommel, im Falle der in Fig. 1 gezeigten Filteransetzmaschine auf der Trockentrommel 24 oder der Sammeltrommel 28, in den Fokusbereich der beiden Strahlungsköpfe 50 und 54 gefördert. Mittels einer in Fig. 2 nicht dargestellten Gegenrollfläche werden die Doppelzigaretten im Fokusbereich der Strahlungsköpfe 50 und 54 um 360° rückwärts gedreht, wobei sie bezüglich der Strahlungsköpfe 50 und 54 stillstehen. Auf diese Weise werden die Zigaretten mit ringförmigen Perforationsspuren oder Lochreihen in den Perforationszonen 62 und 64 versehen. Eine die Zigaretten ortsfest drehende Fördereinrichtung ist beispielsweise in der DE 27 54 104 C2 oder der EP 1 018 392 A2 detailliert dargestellt und beschrieben; auf diese Offenbarungen wird hier ausdrücklich Bezug genommen.

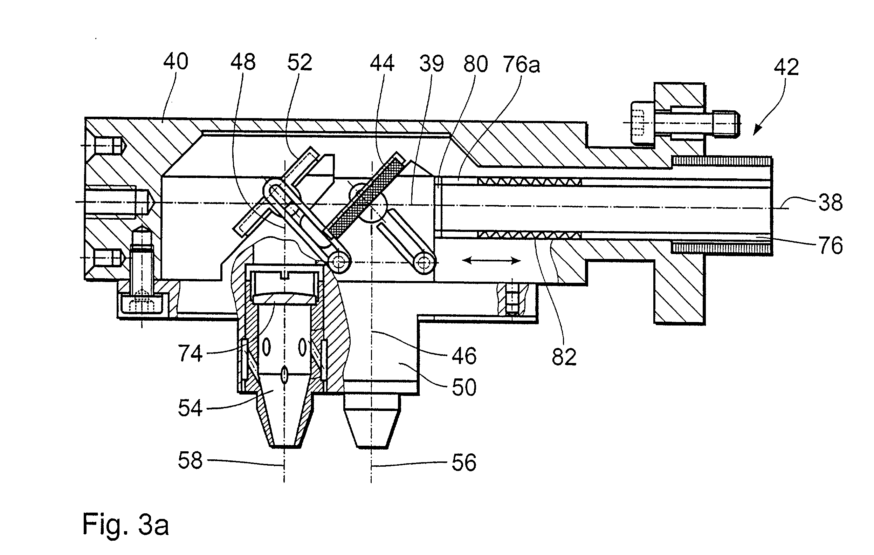

Der Strahlteilerkopf 40 der in Fig. 2 dargestellten Perforationsvorrichtung ist im Querschnitt in einer ersten Ausführung in Fig. 3a im einzelnen dargestellt. Wie Fig. 3a erkennen lässt, sind innerhalb des Gehäuses 40 der bereits erwähnte Strahlenteiler 44 sowie der ebenfalls bereits erwähnte Umlenkspiegel 52 angeordnet. Ebenfalls sind in Fig. 3a die bereits erwähnten Strahlungsköpfe 50 und 54 gezeigt, die am Gehäuse 40 angeordnet sind. Die Strahlungsköpfe 50 und 54 enthalten eine fokussierende Optik, von der beispielhaft eine Linse 74 im zweiten Strahlungskopf 54 in Fig. 3a erkennbar dargestellt ist.

An dieser Stelle sei der Vollständigkeit halber noch angemerkt, daß im Gegensatz zu Fig. 2 in Fig. 3a nur die Achsen der entsprechenden Strahlen 38, 46, 48, 56 und 58 dargestellt sind.

In die dem Laserkopf 37 zugewandte Öffnung 42 des Gehäuses 40 (vgl. auch Fig. 2) ist ein Tubus 76 gesteckt, der sich von der Öffnung 42 bis kurz vor den Strahlenteiler 44 erstreckt. Dementsprechend ist das Gehäuse 40 mit einem hohlzylindrischen Abschnitt versehen, der den Tubus 76 aufnimmt. Dabei ist der Tubus 76 etwa koaxial zur Achse des vom Laserkopf 37 emittierten Strahles 38 angeordnet. An dem Strahlenteiler 44 benachbarten Ende 76a des Tubus 76 sitzt ein diffraktives optisches Element (DOE) 80, das aus dem Strahl 38 einen Doppel- oder Mehrfachstrahl 39 erzeugt, der leicht divergiert und von dem in Fig. 3a nur die Achse dargestellt ist. Wie Fig. 2 erkennen lässt, erzeugt das diffraktive optische Element 80 im dargestellten Ausführungsbeispiel aus dem Strahl 38 vom Laserkopf 37 einen Doppelstrahl 39, der aus zwei Teilstrahlen 39-I und 39-II besteht. Demnach wirkt das diffraktive optische Element 80, das vorzugsweise als optisches Gitter ausgebildet ist, als Strahlmultiplexer.

Der vom diffraktiven optischen Element 80 erzeugte Doppelstrahl 39 wird dann vom Strahlenteiler 44 in der zuvor beschriebenen Weise aufgeteilt und von den Strahlungsköpfen 50 und 54 entsprechend fokussiert, wie Fig. 2 erkennen lässt. Entsprechend den Teilstrahlen 39-I und 39-II besteht der vom Strahlenteiler 44 reflektierte erste Strahl 46 aus zwei Teilstrahlen 46-I und 46-II, der zugehörige vom ersten Strahlungskopf 50 erzeugte konvergierende Strahl 56 aus zwei Teilstrahlen 56-I und 56-II, der vom Strahlenteil 44 durchgelassene zweite Strahl 48 aus zwei Teilstrahlen 48-I und 48-II und der zugehörige vom zweiten Strahlungskopf 54 erzeugte konvergierende Strahl 58 aus zwei Teilstrahlen 58-I und 58-II.

Mit Hilfe des so aufgeteilten Doppelstrahls lassen sich in jeder Perforationszone 62, 64 auf dem Belagpapierabschnitt 60 mehrere nebeneinander liegende Lochreihen erzeugen, wobei in dem in Fig. 2 dargestellten Ausführungsbeispiel jede Perforationszone 62, 64 mit zwei nebeneinander liegenden Lochreihen versehen wird. Der Laserkopf 37 erzeugt den Laserstrahl 38 in pulsierter Form, um in den Perforationszonen 62 und 64 diskrete Löcher einzubringen (vgl. Fig. 2). Durch die Einstellung der Pulsfolgen lassen sich auf diese Weise sehr viele unterschiedliche Perforationsmuster und insbesondere eine unterschiedliche Teilung der jeweiligen Lochreihe realisieren. Dabei wird in jeder Lochreihe in jeder der beiden Perforationszonen 62, 64 gleichzeitig ein Loch eingebracht. Somit wird also in jeder Perforationszone 62, 64 ein Lochpaar gleichzeitig erzeugt, wobei jeweils das eine Loch der einen Lochreihe und das andere Loch der anderen Lochreihe zugeordnet ist. Die Löcher eines Lochpaares liegen auf einer Linie, die in Abhängigkeit von der Ausrichtung des diffraktiven optischen Elementes 80 parallel zur Längs- bzw. Drehachse der Zigarette oder in einem Winkel zu dieser verläuft. Bei dem in Fig. 2 dargestellten Ausführungsbeispiel ist das diffraktive optische Element 80 so eingestellt, daß gleichzeitig Lochpaare erzeugt werden, deren beide Löcher in Umfangsrichtung der Zigarette zueinander versetzt angeordnet sind.

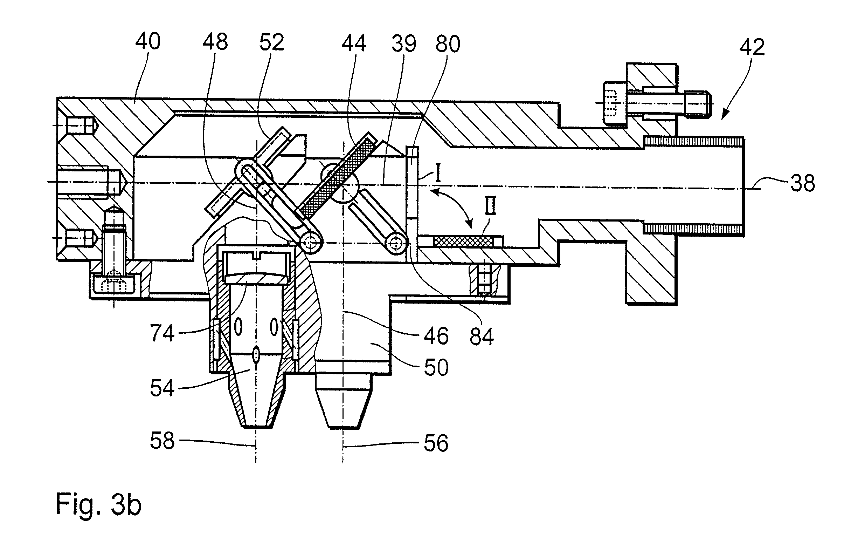

Der durch die Öffnung 42 gesteckte Tubus 76 ist in dem in Fig. 3a dargestellten Ausführungsbeispiel durch eine Feder 82 in Richtung auf die Öffnung 76 federnd vorgespannt und liegt mit seinem äußeren Ende an einer in den Figuren 2 und 3 nicht näher dargestellten Maschine an, an der das Gehäuse 40 angeflanscht ist. Auf diese Weise kann der Tubus 76 gegenüber der Maschine fixiert werden. Bei der Maschine handelt es sich um die zuvor anhand von Figur 1 beschriebene Filteransetzmaschine.

Wie bereits erwähnt, ist der Tubus 76 mit dem daran sitzenden diffraktiven optischen Element 80 in das Gehäuse 40 gesteckt und somit lösbar am Gehäuse 40 gelagert. Auf diese Weise ist es möglich, den Tubus 76 mit dem daran befestigten diffraktiven optischen Element 80 leicht auszutauschen oder durch Weglassen die Entstehung von Doppel- oder Mehrfachstrahlen zu verhindern, wenn nur eine einreihige Perforation gewünscht wird.

In Fig. 3b ist eine zweite Ausführung der vom Gehäuse 40 aufgenommenen optischen Anordnung dargestellt, die sich von der ersten Ausführung gemäß Fig. 3a dadurch unterscheidet, daß das diffraktive optische Element 80 nicht an einem Tubus sitzt, welcher hier fehlt, sondern über ein Gelenk 84 schwenkbar an der Innenseite des Gehäuses 40 befestigt ist. Somit ist das diffraktive optische Element 80 zwischen einer ersten Stellung, in der es im Strahlengang des Strahles 38 relativ zu diesem feststehend angeordnet ist und den erwähnten Doppel- oder Mehrfachstrahl erzeugt, und einer zweiten weggeklappten Stellung verbringbar, in der es aus dem Strahlengang des Strahles 38 heraus verschwenkt ist und somit unwirksam ist, so daß in dieser Stellung die Bildung einer mehrreiheigen Perforation nicht möglich ist.

Das in den Fig. 3a und 3b dargestellte Gehäuse 40 wird, wie bereits zuvor erwähnt, üblicherweise an einer Maschine wie der zuvor anhand von Fig. 1 beschriebenen Filteransetzmaschine befestigt, vorzugsweise angeflanscht. Um die Anwesenheit des Gehäuses 40 zu erfassen, was prozesstechnische Vorteile bringt, können geeignete Mittel zur Erfassung vorgesehen sein.

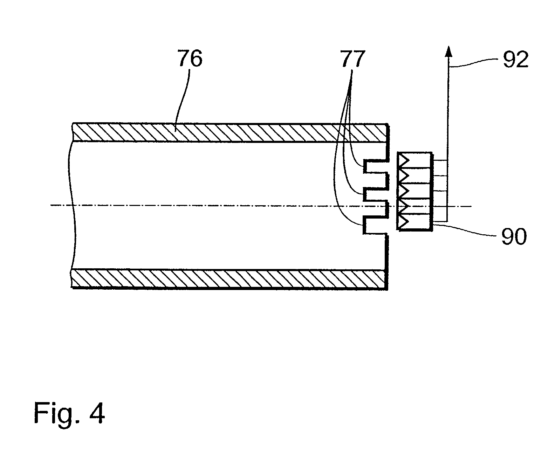

Bei der ersten Ausführung gemäß Fig. 3a können derartige Mittel auch am Tubus 76 vorgesehen sein, um zu erkennen, daß der Tubus 76 eingesteckt ist und ggf. auch welcher Tubus und welches diffraktive optische Element gerade verwendet wird, sofern entsprechende Codiermöglichkeiten vorgesehen sind. In Fig. 4 ist beispielhaft eine solche Möglichkeit dargestellt, bei welcher das maschinenseitige Ende des Tubus 76 mit Ausnehmungen 77 versehen ist, welche eine Codierung bilden. Eine Gruppe von Initiatoren 90, die an der (hier nicht dargestellten) Maschine angeordnet sind, registriert das Vorhandensein bzw. Fehlen der Ausnehmungen 77, wodurch die binäre Codierung erfaßt wird, die als Signal dann über eine Steuerleitung 104 zu einer in den Figuren nicht dargestellten Maschinensteuerung übertragen wird.

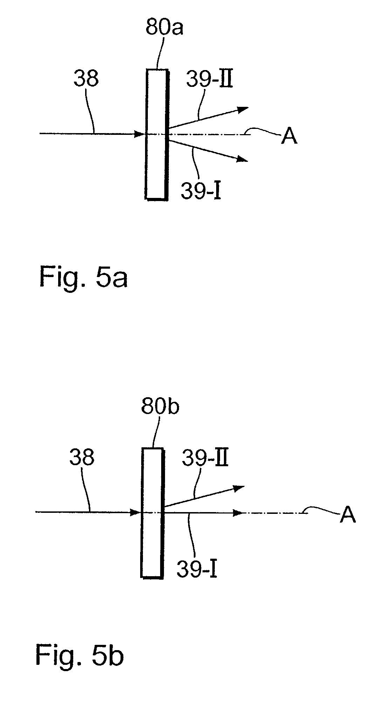

In Fig. 5 sind beispielhaft zwei Ausführungen eines diffraktiven optischen Elementes schematisch im Querschnitt dargestellt.

Bei der in Fig. 5a gezeigten ersten Ausführung 80a wird der einfallende Strahl 38 in zwei Teilstrahlen 39-I und 39-II aufgeteilt, die zur Achse A des einfallenden Strahles 38 winkelsymmetrisch verlaufen. Demnach divergieren die beiden Teilstrahlen 39-I und 39-II in etwa gleichem Winkel zur Achse A. Bei dieser Ausführung werden also beide Teilstrahlen 39-I und 39-II etwa in gleicher Weise, wenn auch in unterschiedlicher Richtung gebeugt.

Demgegenüber verlaufen bei der zweiten Ausführung 80b die aus dem einfallenden Strahl 38 gebildeten beiden Teilstrahlen 39-I und 39-II unsymmetrisch zur Achse A des einfallenden Strahles 38. Der erste Teilstrahl 39-I erfährt nämlich keine Beugung, sondern tritt aus dem diffraktiven optischen Element 80b in der gleichen Richtung aus, in der der einfallende Strahl 38 in das diffraktive optische Element 80b eintritt. Demnach fällt die Achse A des ersten Teilstrahles 39-I mit der Achse des einfallenden Strahles 38 zusammen. Gebeugt wird bei dieser zweiten Ausführung 80b des diffraktiven optischen Elementes nur der zweite Teilstrahl 39-II, der in einem Winkel zur Achse A austritt. Demnach kann der erste Teilstrahl 39-I auch als Strahl nullter Beugungsordnung und der von diesem divergierende zweite Teilstrahl 39-II als Strahl erster Beugungsordnung bezeichnet werden. Der Vorteil der zweiten Ausführung 80b besteht insbesondere darin, daß der gewöhnlich entlang der Achse A auftretende und normalerweise unerwünschte, aber nicht zu vermeidende Streustrahl zur Bildung des ersten Teilstrahls 39-I genutzt wird. Dabei sollte das diffraktive optische Element 80b so ausgebildet sein, daß ein in bezug auf die Achse A zum zweiten Teilstrahl 39-II spiegelsymmetrischer weiterer Teilstrahl, bei dem es sich um einen Teilstrahl -1. Beugungsordnung handelt, im wesentlichen unterdrückt wird, so daß dieser weitere Teilstrahl nicht in Erscheinung tritt.

An dieser Stelle sei im übrigen noch angemerkt, daß der Winkel zwischen den divergierenden Teilstrahlen üblicherweise in Bereich von etwa 1 bis 2° liegt.

Alternativ zu den beiden zuvor beschriebenen Ausführungsbeispielen gemäß den Fig. 3a und b kann das diffraktive optische Element 80 beispielsweise auch im Strahlenteiler 44 integriert sein, was platzliche Vorteile bringt, jedoch einen einfachen Austausch nicht erlaubt.

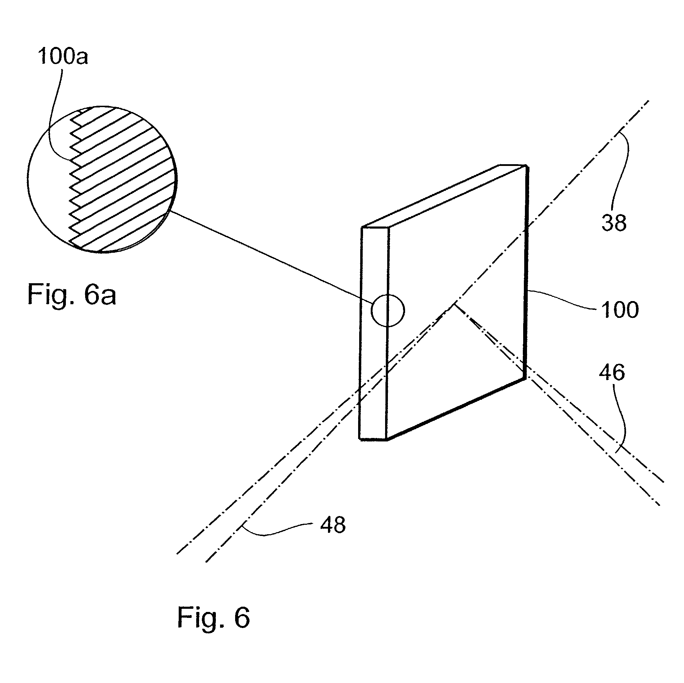

Hierzu kann auch ein integriertes optisches Bauelement vorgesehen sein, daß die Funktionen des Strahlteilers und des diffraktiven optischen Elementes in sich vereint. Ein solches integriertes optisches Bauelement 100 ist schematisch in Fig. 6 gezeigt. Die Oberfläche 100a dieses integrierten optischen Bauelementes 100 weist in dem in Fig. 6a dargestellten Ausführungsbeispiel eine gitterförmige Struktur auf, die nicht nur den von der Strahlenquelle erzeugten Strahl 38 in einen reflektierten ersten Teilstrahl 46 und einen transmittierten zweiten Teilstrahl 48 aufteilt, sondern gleichermaßen auch den reflektierten ersten Teilstrahl 46 und den transmittierten zweiten Teilstrahl 48 jeweils zu einem Doppel- bzw. Mehrfachstrahl aufspaltet, wie Fig. 6 schematisch erkennen läßt.

## Patentansprüche

1. Vorrichtung zum Herstellen von Zonen (62, 64) gewünschter Luftdurchlässigkeit im Hüllmaterial (60) stabförmiger Gegenstände insbesondere der tabakverarbeitenden Industrie, mit
einer Strahlführungseinrichtung (50, 52, 54) zum Fokussieren eines von einer
Strahlenquelle (37) erzeugten energiereichen Strahls (38) auf das Hüllmaterial (60) zur Ausbildung von Perforationszonen (62, 64), und
einer Mehrfachstrahlerzeugungseinrichtung, die aus dem Strahl einen Mehrfachstrahl (39) bildet,
**dadurch gekennzeichnet, daß** die Mehrfachstrahlerzeugungseinrichtung mindestens ein einziges, in seiner Arbeitsstellung gegenüber dem Strahl (37) feststehendes optischen Element (80) aufweist.

2. Vorrichtung nach Anspruch 1,
**dadurch gekennzeichnet, daß** das optische Element (80) aus einem diffraktiven optischen Element besteht.

3. Vorrichtung nach Anspruch 2,
**dadurch gekennzeichnet, daß** das optische Element (80) als optisches Gitter ausgebildet ist.

4. Vorrichtung nach mindestens einem der vorangegangenen Ansprüche, bei welcher das optische Element (80b) einen Mehrfachstrahl (39) mit einer geraden Anzahl von winklig zueinander divergierenden Teilstrahlen (39-I, 39-II) erzeugt, **dadurch gekennzeichnet, daß** das optische Element (80b) so ausgebildet ist, daß ein erster Teilstrahl (39-I) des Mehrfachstrahls (39) in der Richtung bzw. entlang der Achse (A) des in das optische Element (80b) eintretenden Strahls (38) und der oder die weiteren Teilstrahlen (39-II) des Mehrfachstrahls (39) winklig zur Richtung bzw. Achse (A) des in das optische Element (80b) eintretenden Strahls (38) aus dem optischen Element (80b) austreten.

5. Vorrichtung nach Anspruch 4,
bei welcher das optische Element (80b) einen Mehrfachstrahl (39) mit zwei in einem Winkel zueinander divergierenden Teilstrahlen (39-I, 39-II) erzeugt,
**dadurch gekennzeichnet, daß** das optische Element (80b) so ausgebildet ist, daß der erste Teilstrahl (39-I) des Mehrfachstrahls (39) in der Richtung bzw. entlang der Achse (A) des in das optische Element (80b) eintretenden Strahls (38) und der zweite Teilstrahl (39-II) des Mehrfachstrahls (39) winklig zur Richtung bzw. Achse (A) des in das optische Element (80b) eintretenden Strahls (38) aus dem optischen Element (80b) austreten.

6. Vorrichtung nach Anspruch 5, **dadurch gekennzeichnet, daß** das optische Element (80b) so ausgebildet ist, daß ein in bezug auf die Achse (A) zum zweiten Teilstrahl (39-II) spiegelsymmetrischer weiterer Teilstrahl im wesentlichen unterdrückt wird.

7. Vorrichtung nach mindestens einem der vorangegangenen Ansprüche,
**dadurch gekennzeichnet, daß** das optische Element (80) aus dem Strahlengang entfernbar angeordnet ist.

8. Vorrichtung nach Anspruch 7,
**dadurch gekennzeichnet, daß** das optische Element (80) aus dem Strahlengang verschenkbar angeordnet ist.

9. Vorrichtung nach mindestens einem der vorangegangenen Ansprüche,
**dadurch gekennzeichnet, daß** das optische Element (80) auswechselbar angeordnet ist.

10. Vorrichtung nach mindestens einem der vorangegangenen Ansprüche, mit einem die Strahlführungseinrichtung (50, 52, 54) aufnehmenden Gehäuse (40),
**gekennzeichnet durch** ein Halteelement (76) zur Halterung des optischen Elementes (80) am oder im Gehäuse (40).

11. Vorrichtung nach Anspruch 10,
**dadurch gekennzeichnet, daß** das optische Element (80) am Halteelement (76) sitzt.

12. Vorrichtung nach den Ansprüchen 9 und 11,
**dadurch gekennzeichnet, daß** das Halteelement (76) am oder im Gehäuse (40) lösbar befestigt ist.

13. Vorrichtung nach mindestens einem der Ansprüche 10 bis 12,
**dadurch gekennzeichnet, daß** das Halteelement (76) beweglich im Gehäuse (40) angeordnet und in Richtung vom Gehäuse (40) weg durch eine Feder (82) vorgespannt ist.

14. Vorrichtung nach mindestens einem der Ansprüche 10 bis 13,
**gekennzeichnet durch** Mittel (77, 90) zur Erfassung der Anwesenheit des Gehäuses (40) und/oder des Halteelementes (76) bei Anordnung an einer die stabförmigen Gegenstände herstellenden Maschine.

15. Vorrichtung nach mindestens einem der Ansprüche 10 bis 14,
**dadurch gekennzeichnet, daß** das Halteelement aus einem Tubus (76) besteht, durch den die Strahlung (38) geleitet wird und an dessen der Strahlführungseinrichtung (44, 50, 52, 54) zugewandten Ende (76a) das optische Element (80) vorzugsweise sitzt.

16. Vorrichtung nach Anspruch 15,
**dadurch gekennzeichnet, daß** der Tubus (76) in das Gehäuse (40) steckbar ist.

17. Vorrichtung nach mindestens einen der vorangegangenen Ansprüche,
**dadurch gekennzeichnet, daß** die Strahlführungseinrichtung (50, 52, 54) optische Fokussierungsmittel (74) zur Erzeugung von konvergierenden Strahlen (56, 58) und Fokussierung auf die Perforationszonen (62, 64) auf dem Hüllmaterial (60) aufweist.

18. Vorrichtung nach mindestens einem der vorangegangenen Ansprüche,
bei welcher die Mehrfachstrahlerzeugungseinrichtung aus dem Strahl (38) von der Strahlenquelle (37) einen Mehrfachstrahl (39) bildet,
eine Strahlteilungseinrichtung (44) vorgesehen ist, die den Mehrfachstrahl (39) in mindestens zwei Teilstrahlen (46, 48) aufteilt, und
die Strahlführungseinrichtung (50, 52, 54) die Teilstrahlen (46, 48) von der Strahlteilungseinrichtung (44) auf das Hüllmaterial (60) zur Ausbildung einer der Anzahl der Teilstrahlen (46, 48) entsprechenden Anzahl von Perforationszonen (62, 64) fokussiert,
**dadurch gekennzeichnet, daß** die Mehrfachstrahlerzeugungseinrichtung aus einem einzigen, in seiner Arbeitsstellung gegenüber dem Strahl (38) von der Strahlenquelle (37) feststehenden optischen Element (80) besteht.

19. Vorrichtung nach Anspruch 18,
bei welcher die Strahlteilungseinrichtung einen Strahlteiler (100) aufweist,
**dadurch gekennzeichnet, daß** das optische Element in den Strahlteiler (100) integriert ist.

20. Vorrichtung nach Anspruch 19,
daß der Strahlteiler (100) gleichzeitig auch das optische Element bildet.

21. Vorrichtung nach mindestens einem der Ansprüche 1 bis 17,
bei welcher eine Strahlteilungseinrichtung vorgesehen ist, die den von der Strahlenquelle erzeugten energiereichen Strahl in mindestens zwei Teilstrahlen aufteilt, und
die Strahlführungseinrichtung die Teilstrahlen auf das Hüllmaterial zur Ausbildung einer der Anzahl der Teilstrahlen entsprechenden Anzahl von Perforationszonen fokussiert,
wobei die Mehrfachstrahlerzeugungseinrichtung aus jedem Teilstrahl einen Mehrfachstrahl bildet,
**dadurch gekennzeichnet, daß** die Mehrfachstrahlerzeugungseinrichtung für jeden Teilstrahl ein in seiner Arbeitsstellung gegenüber den jeweiligen Teilstrahl feststehendes optisches Element aufweist.

22. Strahlteiler (100), insbesondere für den Einsatz in einer Vorrichtung nach mindestens einem der Ansprüche 18 bis 20, zur Aufteilung eines von einer Strahlenquelle (37) erzeugten Strahles (38) in mindestens zwei Teilstrahlen (46, 48),
**dadurch gekennzeichnet, daß** der Strahlteiler (100) so ausgebildet ist, daß er jeden Teilstrahl (46, 48) als Mehrfachstrahl erzeugt.

23. Verfahren zur Herstellung von Zonen (62, 64) gewünschter Luftdurchlässigkeit im Hüllmaterial (60) stabförmiger Gegenstände insbesondere der Tabak verarbeitenden Industrie, mit den Schritten,
einen von einer Strahlenquelle (37) erzeugten energiereichen Strahl (38) auf das Hüllmaterial (60) zur Ausbildung von Perforationszonen (62, 64) zu fokussieren und aus dem Strahl einen Mehrfachstrahl (39) zu bilden,
**dadurch gekennzeichnet, daß** in einem diffraktiven optischen Element (80) der Strahl in eine gerade Anzahl von winklig zueinander divergierenden Teilstrahlen (39-I, 39-II) zur Bildung des Mehrfachstrahls (39) aufgefächert wird.

24. Verfahren nach Anspruch 23, **dadurch gekennzeichnet, daß** ein erster Teilstrahl (39-I) des Mehrfachstrahls (39) in der Richtung bzw. entlang der Achse (A) des in das diffraktive optische Element (80b) eintretenden Strahls (38) und der oder die weiteren Teilstrahlen (39-II) des Mehrfachstrahls (39) winklig zur Richtung bzw. Achse (A) des in das optische Element (80b) eintretenden Strahls (38) aus dem diffraktiven optischen Element (80b) austreten.

25. Verfahren nach Anspruch 24, bei welchem zwei in einem Winkel zueinander divergierende Teilstrahlen (39-I, 39-II) zur Bildung des Mehrfachstrahls (39) erzeugt werden,
**dadurch gekennzeichnet, daß** der erste Teilstrahl (39-I) des Mehrfachstrahls (39) in der Richtung bzw. entlang der Achse (A) des in das diffraktive optische Element (80b) eintretenden Strahls (38) und der zweite Teilstrahl (39-II) des Mehrfachstrahls (39) im Winkel zur Richtung bzw. Achse (A) des in das diffraktive optische Element (80b) eintretenden Strahls (38) aus dem diffraktiven optischen Element (80b) austritt.

26. Verfahren nach Anspruch 25, **dadurch gekennzeichnet, daß** ein in bezug auf die Achse (A) zum zweiten Teilstrahl (39-II) spiegelsymmetrischer weiterer Teilstrahl im wesentlichen unterdrückt wird.
